# EUROPEAN PATENT SPECIFICATION

(11) **EP 4 005 968 B1**
(45) Date of publication and mention of the grant of the patent: **14.08.2024**
(21) Application number: 21207352.2
(22) Date of filing: 10.11.2021
(51) Int. Cl.: B66F 17/00, B66F 9/075, B60Q 1/50

(54) **VEHICLE APPROACH NOTIFICATION DEVICE AND PICKING TRUCK PROVIDED WITH THE DEVICE**
VORRICHTUNG ZUR MELDUNG DER ANNÄHERUNG EINES FAHRZEUGS UND KOMMISSIONIERER MIT DIESER VORRICHTUNG
DISPOSITIF DE NOTIFICATION D'APPROCHE D'UN VÉHICULE ET CAMION DE RAMASSAGE POURVU DE CE DISPOSITIF

(30) Priority: 25.11.2020 JP 2020194933
(43) Date of publication of application: 01.06.2022
(73) Proprietor: Mitsubishi Logisnext Co., Ltd., Kyoto 617-8585 (JP)
(72) Inventor: TERAO, Ryohei, Kyoto (JP)
(74) Representative: Becker, Eberhard

(56) References cited:
- CN-U- 203 006 881
- DE-A1- 102006 002 960
- DE-A1- 102015 120 041
- DE-A1- 102019 202 734

## Description

### BACKGROUND

### [Technical Field]

The present invention relates to a vehicle approach notification device that notifies a person in the vicinity of approach of a vehicle by irradiating a light toward a road surface near the vehicle, and a picking truck provided with the device.

### [Description of Related Art]

Conventionally, it is known that an industrial vehicle irradiates a notification light toward a road surface on a rear side of the vehicle in order to notify a person in the vicinity of the vehicle of the approach of the vehicle (see, for example, Patent Document 1). In addition, some of industrial vehicles called picking trucks are also configured to be capable of irradiating a notification light.

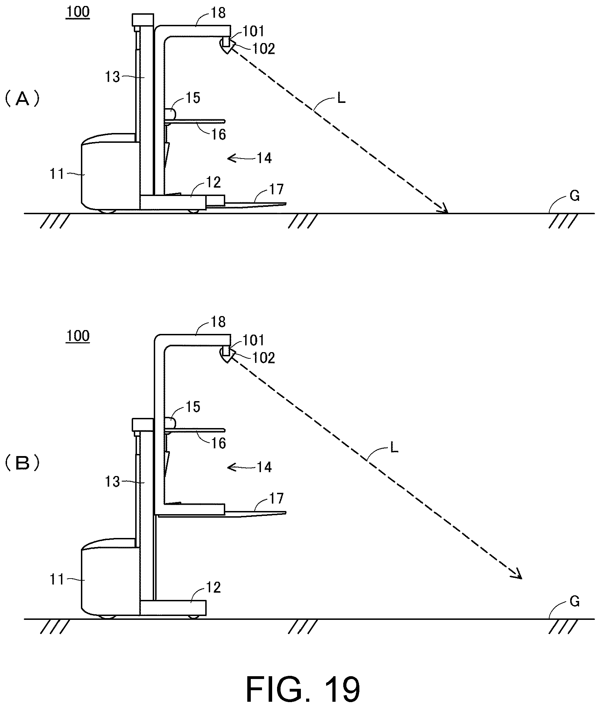

FIG. 19 shows a picking truck 100 configured as described above. As shown in the figure, the picking truck 100 includes a vehicle body 11 having a traveling device, a mast 13 provided on a rear side of the vehicle body 11, a driving cab 14 capable of being lifted and lowered along the mast 13, a pair of left and right forks 17 and 17 that are lifted and lowered together with the driving cab 14, and an illumination part 102 disposed at a head guard 18 of the driving cab 14 via a suitable bracket 101. The illumination part 102 irradiates a notification light L toward a road surface G on the rear side of the vehicle.

A vehicle approach notification device according to the preamble of claims 1 and 6 is known from DE 10 2006 002960 A1.

### Related Art Document(s)

### Patent Document(s)

[Patent Document 1] Japanese Patent Application Laid-Open No. 2014-141329

### SUMMARY

### Problems to be Solved

However, in the conventional picking truck 100, when the driving cab 14 rises to a certain height (at the time of high lift) along the mast 13, the notification light L does not sufficiently reach the road surface G, and as a result, there is an issue that it becomes difficult for a person in the vicinity to notice the approach of the vehicle (see (B) of FIG. 19).

The present invention has been made in view of the above circumstances, and one of the problems to be addressed is to provide a vehicle approach notification device with which the notification effect does not decrease even at the time of high lift, and a picking truck provided with the device.

### Means for Solving the Problems

To solve the above problems, a first vehicle approach notification device according to the present invention is configured to include an illumination part, an irradiation direction change part, and a control part. The illumination part is disposed at a driving cab provided in a vehicle and irradiates a notification light toward a road surface near the vehicle, and the driving cab is capable of being lifted and lowered. The irradiation direction change part changes an irradiation direction by changing a configuration angle of the illumination part with respect to the driving cab. The control part sends a first command associated with the configuration angle to the irradiation direction change part and sends a second command associated with an illumination state to the illumination part. With the control part changing contents of the first command and the second command according to a lifting position of the driving cab, both the irradiation direction and the illumination state change according to the lifting position.

The illumination state may include a blinking frequency or a blinking cycle of the notification light or may include a color of the notification light.

The control part may be configured to send the first command to the irradiation direction change part so that a position of the road surface that is irradiated does not change even if the lifting position changes.

Further, to solve the above problems, a second vehicle approach notification device according to the present invention is configured to include an illumination part, an irradiation direction change part, and a control part. The illumination part is disposed at a driving cab provided in a vehicle and irradiates a notification light toward a road surface near the vehicle, and the driving cab is capable of being lifted and lowered. The irradiation direction change part changes an irradiation direction by changing a configuration angle of the illumination part with respect to the driving cab. The control part sends a first command associated with the configuration angle to the irradiation direction change part and sends a second command associated with an illumination state to the illumination part. With the control part changing a content of the first command according to at least a lifting position of the driving cab, the irradiation direction changes according to the lifting position. With the control part changing a content of the second command according to at least a travel speed of the vehicle, the illumination state changes according to the travel speed.

The illumination state may include a blinking frequency or a blinking cycle of the notification light or may include a color of the notification light.

The control part may be configured to send the first command to the irradiation direction change part so that a position of the road surface that is irradiated does not change even if the lifting position changes.

The control part may be configured to change the content of the second command according to both the lifting position and the travel speed.

The control part may be configured to change the content of the first command according to both the lifting position and the travel speed. In this case, the control part may be configured to send the first command to the irradiation direction change part so that a position of the road surface that is irradiated moves away from the vehicle as the travel speed increases.

Further, to solve the above problems, a first picking truck according to the present invention is configured to include a vehicle body, a mast, a driving cab, an illumination part, an irradiation direction change part, and a control part. The vehicle body has a traveling device. The mast is provided on a rear side of the vehicle body. The driving cab is capable of being lifted and lowered along the mast. The illumination part is disposed at the driving cab and irradiates a notification light toward a road surface near the picking truck. The irradiation direction change part changes an irradiation direction by changing a configuration angle of the illumination part with respect to the driving cab. The control part sends a first command associated with the configuration angle to the irradiation direction change part and sends a second command associated with an illumination state to the illumination part. With the control part changing contents of the first command and the second command according to a lifting position of the driving cab, both the irradiation direction and the illumination state change according to the lifting position.

Further, to solve the above problems, a second picking truck according to the present invention is configured to include a vehicle body, a mast, a driving cab, an illumination part, an irradiation direction change part, and a control part. The vehicle body has a traveling device. The mast is provided on a rear side of the vehicle body. The driving cab is capable of being lifted and lowered along the mast. The illumination part is disposed at the driving cab and irradiates a notification light toward a road surface near the picking truck. The irradiation direction change part changes an irradiation direction by changing a configuration angle of the illumination part with respect to the driving cab. The control part sends a first command associated with the configuration angle to the irradiation direction change part and sends a second command associated with an illumination state to the illumination part. With the control part changing a content of the first command according to at least a lifting position of the driving cab, the irradiation direction changes according to the lifting position. With the control part changing a content of the second command according to at least a travel speed of the vehicle body, the illumination state changes according to the travel speed.

### Effects

According to the present invention, it is possible to provide a vehicle approach notification device with which the notification effect does not decrease even at the time of high lift, and a picking truck provided with the device.

### BRIEF DESCRIPTION OF THE DRAWINGS

FIG. 1 is a schematic side view of a picking truck according to a first embodiment of the present invention.
FIG. 2 is a block diagram of a vehicle approach notification device according to the first embodiment of the present invention.
FIG. 3 is a graph showing (A) the relationship between a lifting position H and a target direction θt and (B) the relationship between the lifting position H and an irradiation distance D in the first embodiment of the present invention.
FIG. 4 is a schematic side view of (A) the picking truck at the time of low lift and (B) the picking truck at the time of high lift according to the first embodiment of the present invention.
FIG. 5 is a view showing a configuration of an irradiation direction change part in the first embodiment of the present invention.
FIG. 6 is a graph showing the relationship between the lifting position H and an illumination state (blinking frequency F) in the first embodiment of the present invention.
FIG. 7 is a graph showing the relationship between the lifting position H and the illumination state (blinking frequency F) in a second embodiment of the present invention.
FIG. 8 is a graph showing the relationship between the lifting position H and the illumination state (illumination color C) in a third embodiment of the present invention.
FIG. 9 is a graph showing the relationship between the lifting position H and the illumination state (illumination color C) in a fourth embodiment of the present invention.
FIG. 10 is a schematic side view of a picking truck according to a fifth embodiment of the present invention.
FIG. 11 is a block diagram of a vehicle approach notification device according to the fifth embodiment of the present invention.
FIG. 12 is a graph showing the relationship between a travel speed V and the illumination state (blinking frequency F) in the fifth embodiment of the present invention.
FIG. 13 is a graph showing the relationship between the travel speed V and the illumination state (blinking frequency F) in a sixth embodiment of the present invention.
FIG. 14 is a graph showing the relationship between the travel speed V and the illumination state (illumination color C) in a seventh embodiment of the present invention.
FIG. 15 is a graph showing the relationship between the travel speed V and the illumination state (illumination color C) in an eighth embodiment of the present invention.
FIG. 16 is a graph showing the relationship between the lifting position H, the travel speed V, and the illumination state (blinking frequency F and illumination color C) in a ninth embodiment of the present invention.
FIG. 17 is a graph showing (A) the relationship between the travel speed V and an adjustment amount Δθ and (B) the relationship between the travel speed V and the irradiation distance D in a tenth embodiment of the present invention.
FIG. 18 is a schematic side view of (A) the picking truck at the time of low-speed travel and (B) the picking truck at the time of high-speed travel according to the tenth embodiment of the present invention.
FIG. 19 is a schematic side view of a conventional picking truck.

### DESCRIPTION OF THE EMBODIMENTS

Hereinafter, embodiments of a vehicle approach notification device and a picking truck according to the present invention will be described with reference to the accompanying drawings.

### [First Embodiment]

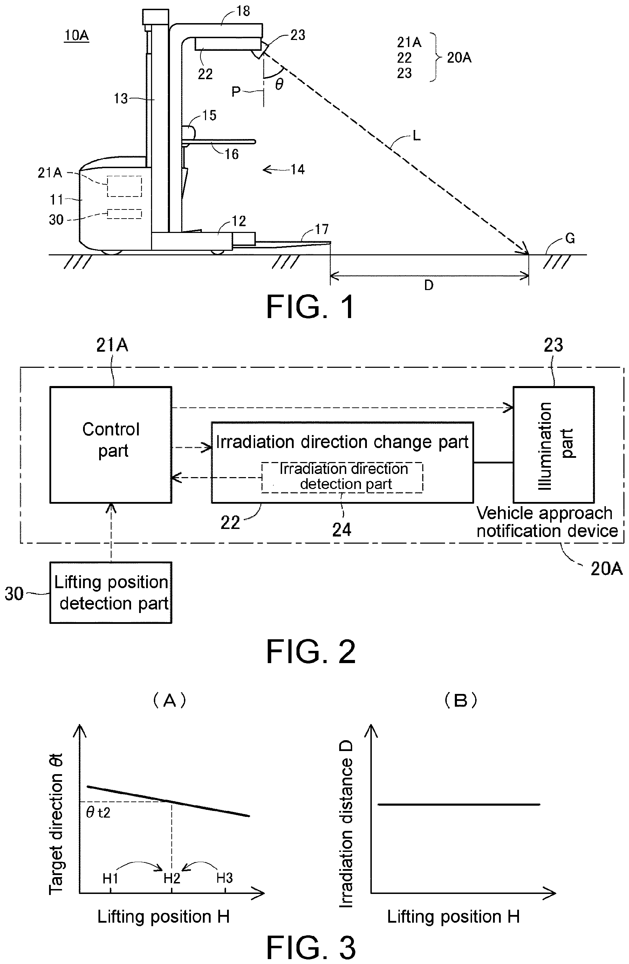

FIG. 1 shows a picking truck 10A according to a first embodiment of the present invention. As shown in the figure, the picking truck 10A according to this embodiment includes a vehicle body 11 having a traveling device, a pair of left and right legs 12 and 12 and a mast 13 provided on a rear side of the vehicle body 11, and a driving cab 14 that may be lifted and lowered along the mast 13. Further, the driving cab 14 has an operation panel 15 composed of various levers and the like operated by an operator, a fall guard 16 for preventing the operator from falling, a pair of left and right forks 17 and 17 extending toward the rear side, and a head guard 18 covering above the operator's head.

The picking truck 10A according to this embodiment further includes a control part 21A, an irradiation direction change part 22, and an illumination part 23 which constitute a vehicle approach notification device 20A, and a lifting position detection part 30.

The illumination part 23 is composed of an LED light that irradiates a notification light L toward a road surface G near the vehicle (in this embodiment, the rear side of the vehicle). An image of the notification light L appearing on the road surface G may have a circular shape with a blurred outline, or may have a spot shape, a line shape, or an arrow shape with a clear outline by the effect of lenses or slits provided in the illumination part 23. Further, the color of the notification light L is preferably a color that stands out with respect to the road surface G in order to enhance the notification effect. For example, when the color of the road surface G is white or light gray, a highly saturated color such as blue, red, or green is preferable.

The irradiation direction change part 22 changes an irradiation direction (in this embodiment, a direction θ with respect to a vertical line P) by changing a configuration angle of the illumination part 23 with respect to the driving cab 14 (the head guard 18 in this embodiment).

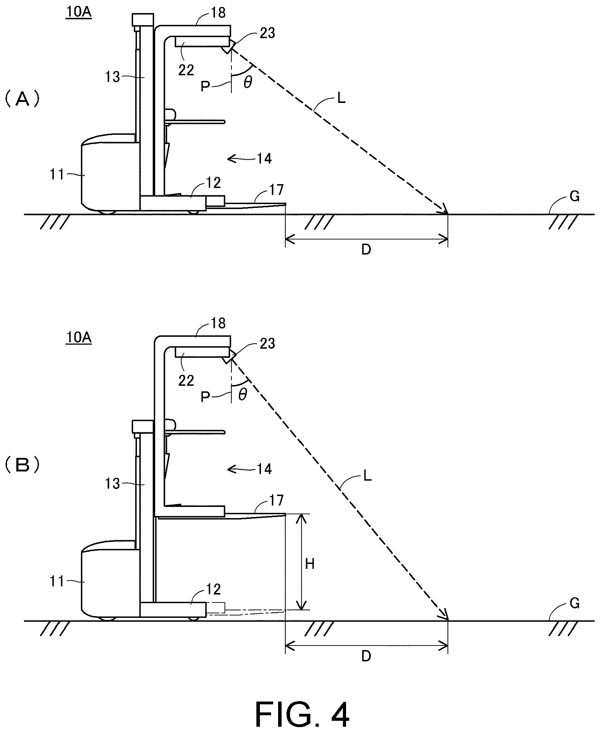

The control part 21A sends a first command associated with the configuration angle to the irradiation direction change part 22 so that the irradiation direction θ becomes a target direction θt (see (A) of FIG. 3) corresponding to a lifting position H (see (B) of FIG. 4) of the driving cab 14 detected by the lifting position detection part 30. At this time, the control part 21A refers to the detection result of the irradiation direction detection part 24 (see FIG. 2).

In this embodiment, the irradiation direction change part 22 and the illumination part 23 are provided on a lower surface of the head guard 18, and the control part 21A and the lifting position detection part 30 are provided in the vehicle body 11, but these are only examples.

When the operator operates the operation panel 15 to lift or lower the driving cab 14, the control part 21A sends the first command to the irradiation direction change part 22 so that the irradiation direction θ detected by the irradiation direction detection part 24 becomes a predetermined target direction θt (see (A) of FIG. 3) corresponding to the latest lifting position H detected by the lifting position detection part 30. For example, when the lifting position H changes from H1 to H2 (where H2 > H1), the control part 21A continuously sends the first command to the irradiation direction change part 22 so that the irradiation direction θ decreases until the irradiation direction θ is in line with θt2 corresponding to H2. In contrast, when the lifting position H changes from H3 to H2 (where H2 < H3), the control part 21A continuously sends the first command to the irradiation direction change part 22 so that the irradiation direction θ increases until the irradiation direction θ is in line with θt2 corresponding to H2. In other words, the control part 21A configures the irradiation direction θ to be in line with a direction θt corresponding to the lifting position H by feedback control.

According to the above control, the irradiation direction θ decreases as the driving cab 14 rises, and as a result, as shown in FIG. 4 and (B) of FIG. 3, an irradiation distance D (in this embodiment, a distance from the tips of the forks 17 and 17 to the center of the image of the notification light L on the road surface G) is kept constant. Therefore, according to the vehicle approach notification device 20A and the picking truck 10A according to this embodiment, even at the time of high lift, the notification light L can be sufficiently delivered to the road surface G, and the notification effect can be maintained.

The correspondence between the lifting position H and the target direction θt shown in (A) of FIG. 3 may be stored in advance in the control part 21A.

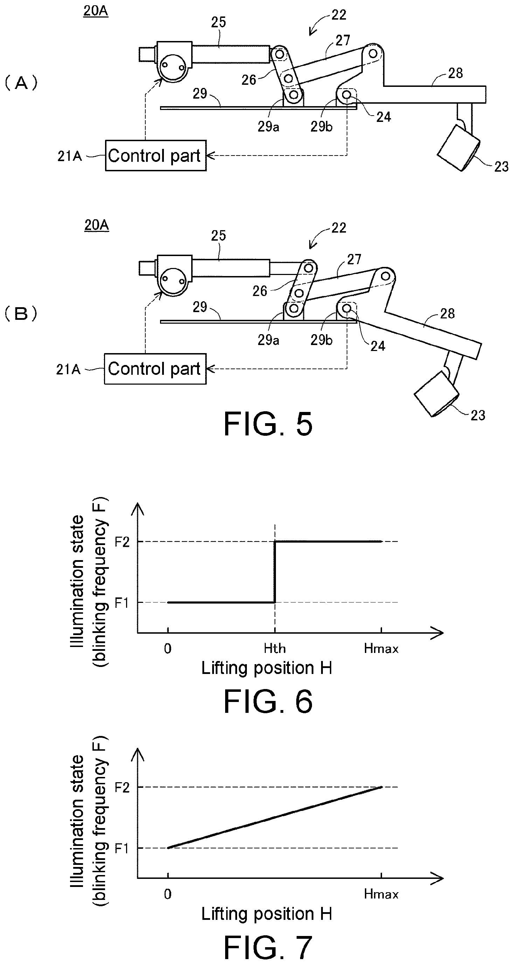

As shown in FIG. 5, the irradiation direction change part 22 is composed of a power cylinder 25 provided on the lower surface of the head guard 18, a link mechanism including three link members 26, 27, and 28, a support member 29 suspended from the lower surface of the head guard 18, and the above irradiation direction detection part 24.

The power cylinder 25 includes a motor that rotates according to the first command from the control part 21A. When the motor rotates according to the first command, the power cylinder 25 expands and contracts along a front-rear direction of the picking truck 10A by an amount corresponding to the rotation amount of the motor. The first command includes a command associated with a rotation direction and a command associated with a rotation speed.

One end portion of the first link member 26 is rotatably connected to a tip portion of the power cylinder 25, and the other end portion is rotatably connected to a front connecting portion 29a of the support member 29. One end portion of the second link member 27 is rotatably connected to a middle portion of the first link member 26, and the other end portion is rotatably connected to a front upper end portion of the third link member 28. A front lower end portion of the third link member 28 is rotatably connected to a rear connecting portion 29b of the support member 29. Then, the illumination part 23 is fixed to a rear end portion of the third link member 28.

The irradiation direction detection part 24 is composed of a potentiometer provided at the rear connecting portion 29b of the support member 29. The irradiation direction detection part 24 detects the position of the third link member 28 with respect to the rear connecting portion 29b and outputs a signal associated with the detection result to the control part 21A. This signal may be said to correspond to the irradiation direction *θ*.

As clearly shown in FIG. 5, when the power cylinder 25 expands and contracts according to the first command from the control part 21A, the link mechanism 26, 27, and 28 operates to change the configuration angle of the illumination part 23 with respect to the head guard 18, and as a result, the irradiation direction *θ* changes.

The control part 21A further sends a second command associated with an illumination state to the illumination part 23 so that a state (of the image) of the notification light L (hereinafter referred to as an "illumination state") becomes a state corresponding to the lifting position H of the driving cab 14.

In this embodiment, the control part 21A sends a second command associated with a blinking frequency F serving as the illumination state to the illumination part 23. More specifically, as shown in FIG. 6, when the lifting position H is less than a predetermined threshold value Hth, the control part 21A sends the second command to the illumination part 23 so that the blinking frequency F of the notification light L becomes F1 (e.g., 0 Hz), and when the lifting position H is equal to or higher than the threshold value Hth, the control part 21A sends the second command to the illumination part 23 so that the blinking frequency F of the notification light L becomes F2 (e.g., 5 Hz) larger than F1. In other words, the control part 21A lights up the illumination part 23 if the lifting position H is less than the threshold value Hth and blinks the illumination part 23 if the lifting position H is equal to or higher than the threshold value Hth.

According to the above control, the notification light L blinks at the time of high lift, during which it is difficult for the operator to learn about the situation around the vehicle. Therefore, according to the vehicle approach notification device 20A and the picking truck 10A according to this embodiment, it is possible to strongly call attention of a person in the vicinity of the vehicle at the time of high lift.

### [Second Embodiment]

A vehicle approach notification device and a picking truck according to a second embodiment of the present invention have configurations similar to the vehicle approach notification device 20A and the picking truck 10A according to the first embodiment shown in FIG. 1 and FIG. 2. However, the control part 21A in this embodiment performs control differently from the control part 21A in the first embodiment.

Like the control part 21A in the first embodiment, the control part 21A in this embodiment sends a first command associated with the configuration angle to the irradiation direction change part 22 so that the irradiation direction θ becomes a target direction θt corresponding to the lifting position H.

Further, as shown in FIG. 7, the control part 21A in this embodiment sends a second command to the illumination part 23 so that the blinking frequency F serving as the illumination state increases linearly from F1 (e.g., 0 Hz) toward F2 (e.g., 5 Hz) as the lifting position H increases.

According to the above control, the blinking rate of the notification light L changes according to the lifting position H. Therefore, according to the vehicle approach notification device 20A and the picking truck 10A according to this embodiment, it is possible to notify a person in the vicinity of how well the operator may be aware of the situation around the vehicle.

### [Third Embodiment]

A vehicle approach notification device and a picking truck according to a third embodiment of the present invention have configurations similar to the vehicle approach notification device 20A and the picking truck 10A according to the first embodiment shown in FIG. 1 and FIG. 2. However, the control part 21A in this embodiment performs control differently from the control part 21A in the first embodiment.

Like the control part 21A in the first embodiment, the control part 21A in this embodiment sends a first command associated with the configuration angle to the irradiation direction change part 22 so that the irradiation direction θ becomes a target direction θt corresponding to the lifting position H.

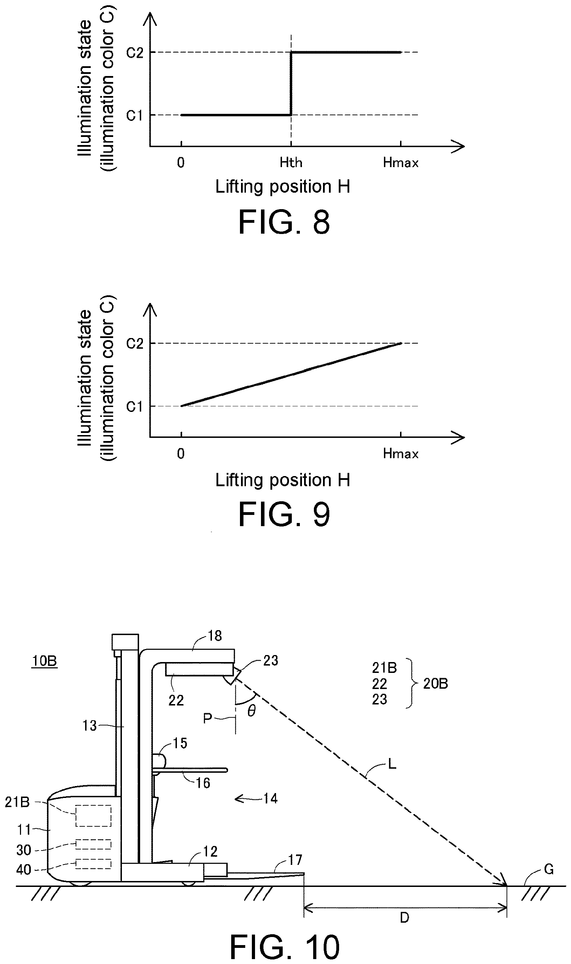

Further, as shown in FIG. 8, when the lifting position H is less than a predetermined threshold value Hth, the control part 21A in this embodiment sends a second command to the illumination part 23 so that the color of the notification light L (hereinafter referred to as an "illumination color C") serving as the illumination state becomes C1 (e.g., blue), and when the lifting position H is equal to or higher than the threshold value Hth, the control part 21A sends the second command to the illumination part 23 so that the illumination color C becomes C2 (e.g., red) different from C1. In other words, the control part 21A in this embodiment lights up the illumination part 23 in blue if the lifting position H is less than the threshold value Hth and lights up the illumination part 23 in red if the lifting position H is equal to or higher than the threshold value Hth.

According to the above control, at the time of high lift during which it is difficult for the operator to learn about the situation around the vehicle, the color of the notification light L becomes red, which has a strong warning meaning. Therefore, according to the vehicle approach notification device 20A and the picking truck 10A according to this embodiment, it is possible to strongly call attention of a person in the vicinity of the vehicle at the time of high lift.

### [Fourth Embodiment]

A vehicle approach notification device and a picking truck according to a fourth embodiment of the present invention have configurations similar to the vehicle approach notification device 20A and the picking truck 10A according to the first embodiment shown in FIG. 1 and FIG. 2. However, the control part 21A in this embodiment performs control differently from the control part 21A in the first embodiment.

Like the control part 21A in the first embodiment, the control part 21A in this embodiment sends a first command associated with the configuration angle to the irradiation direction change part 22 so that the irradiation direction θ becomes a target direction θt corresponding to the lifting position H.

Further, as shown in FIG, 9, the control part 21A in this embodiment sends a second command to the illumination part 23 so that the illumination color C serving as the illumination state changes from C1 (e.g., blue) toward C2 (e.g., red) as the lifting position H increases.

According to the above control, the color of the notification light L changes according to the lifting position H. Therefore, according to the vehicle approach notification device 20A and the picking truck 10A according to this embodiment, it is possible to notify a person in the vicinity of how well the operator may be aware of the situation around the vehicle.

The correspondence between the lifting position H and the illumination state (the blinking frequency F and the illumination color C) shown in FIG. 6, FIG. 7, FIG. 8 and FIG. 9 may be stored in advance in the control part 21A. The control part 21A may also store a correspondence between the lifting position H and a blinking cycle in place of the correspondence shown in FIG. 6 and FIG. 7.

### [Fifth Embodiment]

FIG. 10 shows a picking truck 10B according to a fifth embodiment of the present invention. As shown in the figure, the picking truck 10B according to this embodiment differs from the picking truck 10A according to the first embodiment in terms of further including a travel speed detection part 40 and including a control part 21B in place of the control part 21A, but is similar to the picking truck 10A in other aspects. The control part 21B constitutes a vehicle approach notification device 20B together with the irradiation change part 22 and the illumination part 23.

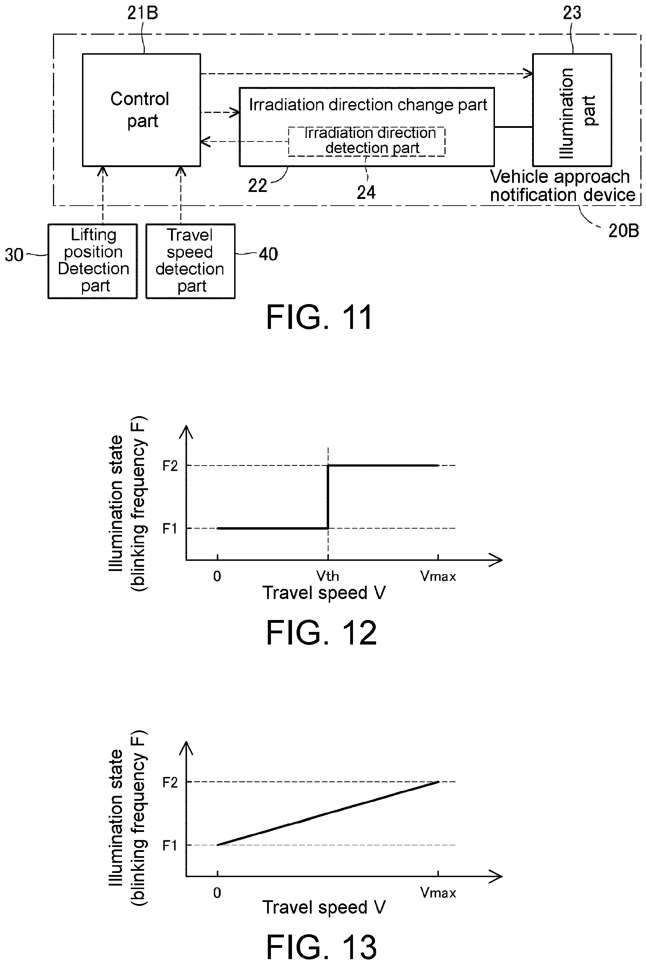

The control part 21B sends a first command associated with the configuration angle to the irradiation direction change part 22 so that the irradiation direction θ becomes a target direction θt corresponding to the lifting position H of the driving cab 14 detected by the lifting position detection part 30. At this time, the control part 21B refers to the detection result of the irradiation direction detection part 24 (see FIG. 11).

According to the above control, the irradiation distance D is kept constant regardless of the lifting position H. Therefore, according to the vehicle approach notification device 20B and the picking truck 10B according to this embodiment, even at the time of high lift, the notification light L can be sufficiently delivered to the road surface G, and the notification effect can be maintained.

Further, the control part 21B sends a second command associated with the illumination state to the illumination part 23 so that the illumination state becomes a state corresponding to a travel speed V of the vehicle body 11 detected by the travel speed detection part 40.

In this embodiment, the control part 21B sends a second command associated with the blinking frequency F serving as the illumination state to the illumination part 23. More specifically, as shown in FIG. 12, when the travel speed V is less than a predetermined threshold value Vth, the control part 21B sends the second command to the illumination part 23 so that the blinking frequency F of the notification light L becomes F1 (e.g., 0 Hz), and when the travel speed V is equal to or higher than the threshold value Vth, the control part 21B sends the second command to the illumination part 23 so that the blinking frequency F of the notification light L becomes F2 (e.g., 5 Hz) larger than F1. In other words, the control part 21B lights up the illumination part 23 if the travel speed V is less than the threshold value Vth and blinks the illumination part 23 if the travel speed V is equal to or higher than the threshold value Vth.

According to the above control, the notification light L blinks at the time of high-speed travel during which there is a high risk of collision with a person in the vicinity of the vehicle. Therefore, according to the vehicle approach notification device 20B and the picking truck 10B according to this embodiment, it is possible to strongly call attention of a person in the vicinity of the vehicle at the time of high-speed travel.

### [Sixth Embodiment]

A vehicle approach notification device and a picking truck according to a sixth embodiment of the present invention have configurations similar to the vehicle approach notification device 20B and the picking truck 10B according to the fifth embodiment shown in FIG. 10 and FIG. 11. However, the control part 21B in this embodiment performs control differently from the control part 21B in the fifth embodiment.

Like the control part 21B in the fifth embodiment, the control part 21B in this embodiment sends a first command associated with the configuration angle to the irradiation direction change part 22 so that the irradiation direction θ becomes a target direction θt corresponding to the lifting position H.

Further, as shown in FIG. 13, the control part 21B in this embodiment sends a second command to the illumination part 23 so that the blinking frequency F serving as the illumination state linearly increases from F1 (e.g., 0 Hz) toward F2 (e.g., 5 Hz) as the travel speed V increases.

According to the above control, the blinking rate of the notification light L changes according to the travel speed V. Therefore, according to the vehicle approach notification device 20B and the picking truck 10B according to this embodiment, it is possible to notify a person in the vicinity of the degree of a risk of collision.

### [Seventh Embodiment]

A vehicle approach notification device and a picking truck according to a seventh embodiment of the present invention have configurations similar to the vehicle approach notification device 20B and the picking truck 10B according to the fifth embodiment shown in FIG. 10 and FIG. 11. However, the control part 21B in this embodiment performs control differently from the control part 21B in the fifth embodiment.

Like the control part 21B in the fifth embodiment, the control part 21B in this embodiment sends a first command associated with the configuration angle to the irradiation direction change part 22 so that the irradiation direction θ becomes a target direction θt corresponding to the lifting position H.

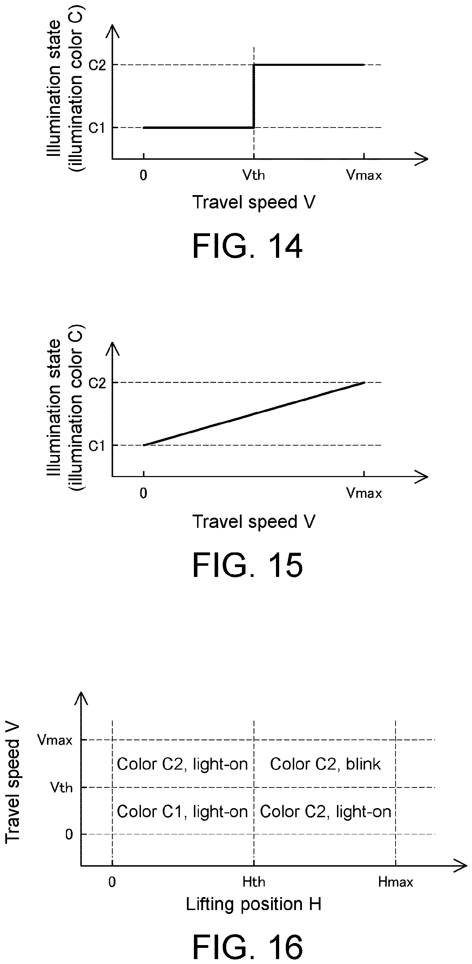

Further, as shown in FIG. 14, when the travel speed V is less than a predetermined threshold value Vth, the control part 21B in this embodiment sends a second command to the illumination part 23 so that the illumination color C becomes C1 (e.g., blue), and when the travel speed V is equal to or higher than the threshold value Vth, the control part 21B sends the second command to the illumination part 23 so that the illumination color C becomes C2 (e.g., red) different from C1. In other words, the control part 21B in this embodiment lights up the illumination part 23 in blue if the travel speed V is less than the threshold value Vth and lights up the illumination part 23 in red if the travel speed V is equal to or higher than the threshold value Vth.

According to the above control, at the time of high-speed travel during which there is a high risk of collision with a person in the vicinity of the vehicle, the color of the notification light L becomes red, which has a strong warning meaning. Therefore, according to the vehicle approach notification device 20B and the picking truck 10B according to this embodiment, it is possible to strongly call attention of a person in the vicinity of the vehicle at the time of high-speed travel.

### [Eighth Embodiment]

A vehicle approach notification device and a picking truck according to an eighth embodiment of the present invention have configurations similar to the vehicle approach notification device 20B and the picking truck 10B according to the fifth embodiment shown in FIG. 10 and FIG. 11. However, the control part 21B in this embodiment performs control differently from the control part 21B in the fifth embodiment.

Like the control part 21B in the fifth embodiment, the control part 21B in this embodiment sends a first command associated with the configuration angle to the irradiation direction change part 22 so that the irradiation direction θ becomes a target direction θt corresponding to the lifting position H.

Further, as shown in FIG. 15, the control part 21B in this embodiment sends a second command to the illumination part 23 so that the illumination color C serving as the illumination state changes from C1 (e.g., blue) toward C2 (e.g., red) as the travel speed V increases.

According to the above control, the color of the notification light L changes according to the travel speed V. Therefore, according to the vehicle approach notification device 20B and the picking truck 10B according to this embodiment, it is possible to notify a person in the vicinity of the degree of a risk of collision.

### [Ninth Embodiment]

A vehicle approach notification device and a picking truck according to a ninth embodiment of the present invention have configurations similar to the vehicle approach notification device 20B and the picking truck 10B according to the fifth embodiment shown in FIG. 10 and FIG. 11. However, the control part 21B in this embodiment performs control differently from the control part 21B in the fifth embodiment.

Like the control part 21B in the fifth embodiment, the control part 21B in this embodiment sends a first command associated with the configuration angle to the irradiation direction change part 22 so that the irradiation direction θ becomes a target direction θt corresponding to the lifting position H.

Further, as shown in FIG. 16, the control part 21B in this embodiment sends a second command to the illumination part 23 so that both the blinking frequency F and the illumination color C serving as the illumination states change according to both the lifting position H and the travel speed V. More specifically, the control part 21B: (1) lights up the illumination part 23 in a color C1 (e.g., blue) if the lifting position H is less than a threshold value Hth and the travel speed V is less than a threshold Vth; (2) blinks the illumination part 23 in a color C2 (e.g., red) if the lifting position H is equal to or higher than the threshold value Hth and the travel speed V is equal to or higher than the threshold value Vth; and (3) lights up the illumination part 23 in the color C2 in cases other than the above.

According to the above control, two illumination states (the blinking frequency F and the illumination color C) change according to the lifting position H and the travel speed V. Therefore, according to the vehicle approach notification device 20B and the picking truck 10B according to this embodiment, it is possible to clearly notify a person in the vicinity of the degree of a risk of collision.

The correspondence between the travel speed V and the illumination state shown in FIG. 12, FIG. 13, FIG. 14, and FIG. 15 and the correspondence between the lifting position H, the travel speed V, and the illumination state shown in FIG. 16 may be stored in advance in the control part 21B. The control part 21B may also store a correspondence between the travel speed V and a blinking cycle in place of the correspondence shown in FIG. 12 and FIG. 13, and may also store a correspondence between the lifting position H/the travel speed V and a blinking cycle/the illumination color C in place of the correspondence shown in FIG. 16.

### [Tenth Embodiment]

A vehicle approach notification device and a picking truck according to a tenth embodiment of the present invention have configurations similar to the vehicle approach notification device 20B and the picking truck 10B according to the fifth embodiment shown in FIG. 10 and FIG. 11. However, the control part 21B in this embodiment performs control differently from the control part 21B in the fifth embodiment.

Like the control part 21B in the ninth embodiment, the control part 21B in this embodiment sends a second command to the illumination part 23 so that both the blinking frequency F and the illumination color C serving as the illumination states change according to both the lifting position H and the travel speed V.

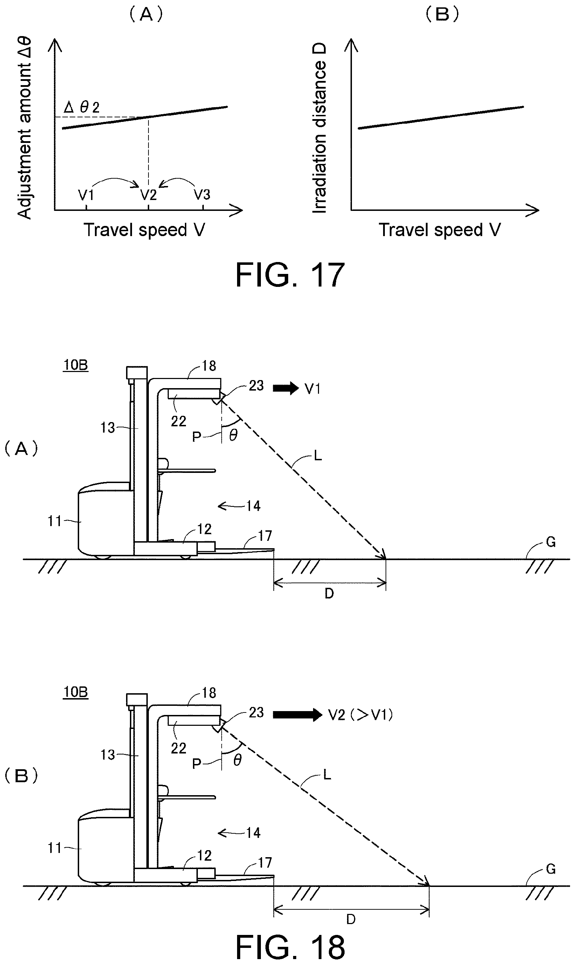

Further, the control part 21B in this embodiment sends a first command to the irradiation direction change part 22 so that the irradiation direction *θ* detected by the irradiation direction detection part 24 is a sum of a predetermined target direction *θ*t corresponding to the lifting position H (see (A) of FIG. 3) and a predetermined adjustment amount Δ*θ* corresponding to the travel speed V (see (A) of FIG. 17). For example, when the travel speed V changes from V1 to V2 (where V2 > V1) with the lifting position H being H2, the control part 21B continuously sends the first command to the irradiation direction change part 22 so that the irradiation direction *θ* increases until the irradiation direction *θ* is in line with θt2 + Δ*θ*2. In contrast, when the travel speed V changes from V3 to V2 (where V2 < V3) with the lifting position H being H2, the control part 21B continuously sends the first command to the irradiation direction change part 22 so that the irradiation direction *θ* decreases until the irradiation direction *θ* is in line with *θ*t2 + Δ*θ*2.

The correspondence between the travel speed V and the adjustment amount Δθ shown in (A) of FIG. 17 may be stored in advance in the control part 21B.

According to the above control, the irradiation direction *θ* increases as the travel speed V increases, and the irradiation distance D also increases as shown in FIG. 18 and (B) of FIG. 17. Therefore, according to the vehicle approach notification device 20B and the picking truck 10B according to this embodiment, it is possible to notify a person in the vicinity earlier of the approach of the vehicle at the time of high-speed travel.

When the irradiation distance D increases, the image of the notification light L appearing on the road surface G becomes weak, and the notification effect (visibility) may decrease. Therefore, it is preferable that the irradiation distance D is increased only when necessary (i.e., at the time of high-speed travel). In other words, it is not preferable to uniformly increase the irradiation distance D regardless of the travel speed V.

### [Modification Example]

Although some embodiments of the vehicle approach notification device and the picking truck according to the present invention have been described above, the configuration of the present invention is not limited thereto.

For example, the control parts 21A and 21B of the embodiments may be provided at an arbitrary position of the picking trucks 10A and 10B, and the irradiation direction change part 22 and the illumination part 23 of the embodiments may be provided at arbitrary positions of the driving cab 14.

The vehicle approach notification devices 20A and 20B according to the embodiments may be provided in a vehicle other than a picking truck that is provided with a driving cab which may be lifted and lowered.

The vehicle approach notification devices 20A and 20B according to the embodiments may further include an alarm part that outputs a warning sound under the control of the control parts 21A and 21B. For example, when the lifting position H is equal to or higher than a threshold value Hth, the control part 21A activates the alarm part so that it is possible to effectively notify a person in the vicinity of the vehicle of the high lift. Further, for example, when the travel speed V is equal to or higher than a threshold value Vth, the control part 21B activates the alarm part so that it is possible to effectively notify a person in the vicinity of the vehicle that a vehicle traveling at high speed is nearby. The threshold values Hth and Vth for changing the illumination states and the threshold values for activating the alarm part may be the same or different.

The control parts 21A and 21B of the embodiments may also control the irradiation direction change part 22 so that the irradiation distance D decreases or may also control the irradiation direction change part 22 so that the irradiation distance D slightly increases as the driving cab 14 rises.

Further, the control part 21B of the embodiments may control the irradiation direction change part 22 so that the irradiation distance D increases in a curve pattern or may control the irradiation direction change part 22 so that the irradiation distance D increases stepwise as the travel speed V increases.

### Description of Reference Numerals

- 10A, 10B: picking truck
- 11: vehicle body
- 12: leg
- 13: mast
- 14: driving cab
- 15: operation panel
- 16: fall guard
- 17: fork
- 18: head guard
- 20A, 20B: vehicle approach notification device
- 21A, 21B: control part
- 22: irradiation direction change part
- 23: illumination part
- 24: irradiation direction detection part
- 25: power cylinder
- 26: first link member
- 27: second link member
- 28: third link member
- 29: support member
- 30: lifting position detection part
- 40: travel speeded detection part

## Claims

1. A vehicle approach notification device (20A) comprising:
an illumination part (23) that is disposed at a driving cab (14) provided in a vehicle and irradiates a notification light toward a road surface near the vehicle;
an irradiation direction change part (22) that changes an irradiation direction by changing a configuration angle of the illumination part (23) with respect to the driving cab (14); and
a control part (21A) that sends a first command associated with the configuration angle to the irradiation direction change part (22) and sends a second command associated with an illumination state to the illumination part (23), **characterised in that** the driving cab (14) is capable of being lifted and lowered,
wherein with the control part (21A) changing contents of the first command and the second command according to a lifting position of the driving cab (14), both the irradiation direction and the illumination state change according to the lifting position.

2. The vehicle approach notification device (20A) according to claim 1, wherein the illumination state comprises a blinking frequency or a blinking cycle of the notification light.

3. The vehicle approach notification device (20A) according to claim 1 or 2, wherein the illumination state comprises a color of the notification light.

4. The vehicle approach notification device (20A) according to any one of claims 1 to 3, wherein the control part (21A) sends the first command to the irradiation direction change part (22) so that a position of the road surface that is irradiated does not change even if the lifting position changes.

5. A picking truck (10A) comprising:
the vehicle approach notification device (20A) according to any one of claims 1 to 4;
a vehicle body (11) having a traveling device; and
a mast (13) provided on a rear side of the vehicle body (11);
wherein the driving cab (14) of the picking truck (10A) is capable of being lifted and lowered along the mast (13); and
the illumination part (23) is disposed at the driving cab (14).

6. A vehicle approach notification device (20B) comprising:
an illumination part (23) that is disposed at a driving cab (14) provided in a vehicle and irradiates a notification light toward a road surface near the vehicle;
an irradiation direction change part (22) that changes an irradiation direction by changing a configuration angle of the illumination part (23) with respect to the driving cab (14); and
a control part (21B) that sends a first command associated with the configuration angle to the irradiation direction change part (22) and sends a second command associated with an illumination state to the illumination part (23), **characterised in that** the driving cab (14) is capable of being lifted and lowered,
wherein with the control part (21B) changing a content of the first command according to at least a lifting position of the driving cab (14), the irradiation direction changes according to the lifting position, and
with the control part (21B) changing a content of the second command according to at least a travel speed of the vehicle, the illumination state changes according to the travel speed.

7. The vehicle approach notification device (20B) according to claim 6, wherein the illumination state comprises a blinking frequency or a blinking cycle of the notification light.

8. The vehicle approach notification device (20B) according to claim 6 or 7, wherein the illumination state comprises a color of the notification light.

9. The vehicle approach notification device (20B) according to any one of claims 6 to 8, wherein the control part (21B) sends the first command to the irradiation direction change part (22) so that a position of the road surface that is irradiated does not change even if the lifting position changes.

10. The vehicle approach notification device (20B) according to any one of claims 6 to 9, wherein the control part (21B) changes the content of the second command according to both the lifting position and the travel speed.

11. The vehicle approach notification device (20B) according to any one of claims 6 to 10, wherein the control part (21B) changes the content of the first command according to both the lifting position and the travel speed.

12. The vehicle approach notification device (20B) according to claim 11, wherein the control part (21B) sends the first command to the irradiation direction change part (22) so that a position of the road surface that is irradiated moves away from the vehicle as the travel speed increases.

13. A picking truck (10B) comprising:
the vehicle approach notification device (20B) according to any one of claims 6-12;
a vehicle body (11) having a traveling device; and
a mast (13) provided on a rear side of the vehicle body (11);
wherein the driving cab (14) of the picking truck (10B) is capable of being lifted and lowered along the mast (13); and
the illumination part (23) is disposed at the driving cab (14) of the picking truck (10B).

## Patentansprüche

1. Fahrzeugnäherungs-Meldevorrichtung (20A), umfassend:
ein Beleuchtungsteil (23), das an einer Fahrerkabine (14) angeordnet ist, die in einem Fahrzeug bereitgestellt ist und eine Meldeleuchte in Richtung einer Straßenoberfläche in der Nähe des Fahrzeugs abstrahlt,
ein Bestrahlungsrichtung-Änderungsteil (22), das eine Bestrahlungsrichtung durch Ändern eines Konfigurationswinkels des Beleuchtungsteils (23) in Bezug auf die Fahrerkabine (14) ändert; und
ein Steuerteil (21A), das einen ersten Befehl, der dem Konfigurationswinkel zugeordnet ist, an das Bestrahlungsrichtungs-Änderungsteil (22) sendet und einen zweiten Befehl, der einem Beleuchtungszustand zugeordnet ist, an das Beleuchtungsteil (23) sendet,
**dadurch gekennzeichnet, dass** die Fahrerkabine (14) angehoben und gesenkt werden kann,
wobei mit dem Steuerteil (21A), das Inhalte des ersten Befehls und des zweiten Befehls entsprechend einer Hebeposition der Fahrerkabine (14) ändert, sowohl die Bestrahlungsrichtung als auch der Beleuchtungszustand entsprechend der Hebeposition geändert werden.

2. Fahrzeugnäherungs-Meldevorrichtung (20A) gemäß Anspruch 1, wobei der Beleuchtungszustand eine Blinkfrequenz oder einen Blinkzyklus der Meldeleuchte umfasst.

3. Fahrzeugnäherungs-Meldevorrichtung (20A) gemäß Anspruch 1 oder 2, wobei der Beleuchtungszustand eine Farbe der Meldeleuchte umfasst.

4. Fahrzeugannäherungs-Meldevorrichtung (20A) gemäß einem der Ansprüche 1 bis 3, wobei das Steuerteil (21A) den ersten Befehl an das Bestrahlungsrichtungs-Änderungsteil (22) sendet, so dass sich eine Position der bestrahlten Straßenoberfläche nicht ändert, selbst wenn sich die Hebeposition ändert.

5. Kommissioniertruck (10A), umfassend:
die Fahrzeugnäherungs-Meldevorrichtung (20A) gemäß einem der Ansprüche 1 bis 4;
einen Fahrzeugkörper (11) mit einer Fahrvorrichtung; und
einen Mast (13), der an einer Rückseite des Fahrzeugkörpers (11) bereitgestellt ist;
wobei die Fahrerkabine (14) des Kommissionierstrucks (10A) entlang des Mastes (13) angehoben und abgesenkt werden kann; und
das Beleuchtungsteil (23) an der Fahrerkabine (14) angeordnet ist.

6. Fahrzeugnäherungs-Meldevorrichtung (20B), umfassend:
ein Beleuchtungsteil (23), das an einer in einem Fahrzeug bereitgestellten Fahrerkabine (14) angeordnet ist und eine Meldeleuchte in Richtung einer Straßenoberfläche in der Nähe des Fahrzeugs abstrahlt,
ein Bestrahlungsrichtungs-Änderungsteil (22), das eine Bestrahlungsrichtung durch Ändern eines Konfigurationswinkels des Beleuchtungsteils (23) in Bezug auf die Fahrerkabine (14) ändert; und
ein Steuerteil (21B), das einen ersten Befehl, der dem Konfigurationswinkel zugeordnet ist, an das Bestrahlungsrichtungs-Änderungsteil (22) sendet und einen zweiten Befehl, der einem Beleuchtungszustand zugeordnet ist, an das Beleuchtungsteil (23) sendet,
**dadurch gekennzeichnet, dass** die Fahrerkabine (14) angehoben und gesenkt werden kann,
wobei, wenn das Steuerteil (21B) einen Inhalt des ersten Befehls entsprechend mindestens einer Hebeposition der Führerkabine (14) ändert, sich die Bestrahlungsrichtung entsprechend der Hebeposition ändert, und
mit dem Steuerteil (21B), das einen Inhalt des zweiten Befehls gemäß mindestens einer Fahrgeschwindigkeit des Fahrzeugs ändert, der Beleuchtungszustand sich gemäß der Fahrgeschwindigkeit ändert.

7. Fahrzeugnäherungs-Meldevorrichtung (20B) gemäß Anspruch 6, wobei der Beleuchtungszustand eine Blinkfrequenz oder einen Blinkzyklus der Meldeleuchte umfasst.

8. Fahrzeugnäherungs-Meldevorrichtung (20B) gemäß Anspruch 6 oder 7, wobei der Beleuchtungszustand eine Farbe der Meldeleuchte umfasst.

9. Fahrzeugnäherungs-Meldevorrichtung (20B) gemäß einem der Ansprüche 6 bis 8, wobei das Steuerteil (21B) den ersten Befehl an das Bestrahlungsrichtungs-Änderungsteil (22) sendet, so dass sich eine Position der bestrahlten Straßenoberfläche nicht ändert, selbst wenn sich die Hebeposition ändert.

10. Fahrzeugnäherungs-Meldevorrichtung (20B) gemäß einem der Ansprüche 6 bis 9, wobei das Steuerteil (21B) den Inhalt des zweiten Befehls gemäß sowohl der Hebeposition als auch der Fahrgeschwindigkeit ändert.

11. Fahrzeugnäherungs-Meldevorrichtung (20B) gemäß einem der Ansprüche 6 bis 10, wobei das Steuerteil (21B) den Inhalt des ersten Befehls sowohl gemäß der Hebeposition als auch der Fahrgeschwindigkeit ändert.

12. Fahrzeugnäherungs-Meldevorrichtung (20B) gemäß Anspruch 11, wobei das Steuerteil (21B) den ersten Befehl an das Bestrahlungsrichtungs-Änderungsteil (22) sendet, so dass sich eine Position der Straßenoberfläche, die bestrahlt wird, von dem Fahrzeug wegbewegt, wenn die Fahrgeschwindigkeit zunimmt.

13. Kommissioniertruck (10B), umfassend:
die Fahrzeugnäherungs-Meldevorrichtung (20B) gemäß einem der Ansprüche 6-12;
einen Fahrzeugkörper (11) mit einer Fahrvorrichtung; und
einen Mast (13), der an einer Rückseite des Fahrzeugkörpers (11) bereitgestellt ist;
wobei die Fahrerkabine (14) des Kommissioniertrucks (10B) entlang des Mastes (13) angehoben und abgesenkt werden kann; und
das Beleuchtungsteil (23) an der Fahrerkabine (14) des Kommissioniertrucks (10B) angeordnet ist.

## Revendications

1. Dispositif de notification d'approche de véhicule (20A) comprenant :
une partie d'éclairage (23) qui est disposée au niveau d'une cabine de conduite (14) prévue dans un véhicule et qui émet une lumière de notification vers une surface de route à proximité du véhicule ;
une partie de modification de direction d'irradiation (22) qui modifie une direction d'irradiation en modifiant un angle de configuration de la partie d'éclairage (23) par rapport à la cabine de conduite (14) ; et
une partie de commande (21A) qui envoie une première commande associée à l'angle de configuration à la partie de modification de direction d'irradiation (22) et envoie une deuxième commande associée à un état d'éclairage à la partie d'éclairage (23), **caractérisée en ce que** la cabine de conduite (14) est capable d'être soulevée et abaissée,
dans lequel, avec la partie de commande (21A) modifiant le contenu de la première commande et de la deuxième commande en fonction d'une position de levage de la cabine de conduite (14), à la fois la direction d'irradiation et l'état d'éclairage varient en fonction de la position de levage.

2. Dispositif de notification d'approche de véhicule (20A) selon la revendication 1, dans lequel l'état d'éclairage comprend une fréquence de clignotement ou un cycle de clignotement du voyant de notification.

3. Dispositif de notification d'approche de véhicule (20A) selon la revendication 1 ou 2, dans lequel l'état d'éclairage comprend une couleur du voyant de notification.

4. Dispositif de notification d'approche de véhicule (20A) selon une quelconque des revendications 1 à 3, dans lequel la partie de commande (21A) envoie la première commande à la partie de modification de direction d'irradiation (22) de sorte qu'une position de la surface de la route qui est irradiée ne varie pas même si la position de levage varie.

5. Chariot de ramassage (10A) comprenant :
le dispositif de notification d'approche de véhicule (20A) selon une quelconque des revendications 1 à 4 ;
une carrosserie de véhicule (11) ayant un dispositif de déplacement ; et
un mât (13) prévu sur un côté arrière de la carrosserie de véhicule (11) ;
dans lequel la cabine de conduite (14) du chariot de ramassage (10A) est capable d'être soulevée et abaissée le long du mât (13) ; et
la partie d'éclairage (23) est disposée au niveau de la cabine de conduite (14).

6. Dispositif de notification d'approche de véhicule (20B) comprenant :
une partie d'éclairage (23) qui est disposée au niveau d'une cabine de conduite (14) prévue dans un véhicule et qui émet une lumière de notification vers une surface de route à proximité du véhicule ;
une partie de modification de direction d'irradiation (22) qui modifie une direction d'irradiation en modifiant un angle de configuration de la partie d'éclairage (23) par rapport à la cabine de conduite (14) ; et
une partie de commande (21B) qui envoie une première commande associée à l'angle de configuration à la partie de modification de direction d'irradiation (22) et envoie une deuxième commande associée à un état d'éclairage à la partie d'éclairage (23), **caractérisé en ce que** la cabine de conduite (14) est capable d'être soulevée et abaissée,
dans lequel, avec la partie de commande (21B) modifiant un contenu de la première commande en fonction d'au moins une position de levage de la cabine de conduite (14), la direction d'irradiation varie en fonction de la position de levage, et
avec la partie de commande (21B) modifiant un contenu de la deuxième commande en fonction d'au moins une vitesse de déplacement du véhicule, l'état d'éclairage varie en fonction de la vitesse de déplacement.

7. Dispositif de notification d'approche de véhicule (20B) selon la revendication 6, dans lequel l'état d'éclairage comprend une fréquence de clignotement ou un cycle de clignotement du voyant de notification.

8. Dispositif de notification d'approche de véhicule (20B) selon la revendication 6 ou 7, dans lequel l'état d'éclairage comprend une couleur de la lumière de notification.

9. Dispositif de notification d'approche de véhicule (20B) selon une quelconque des revendications 6 à 8, dans lequel la partie de commande (21B) envoie la première commande à la partie de modification de direction d'irradiation (22) de sorte qu'une position de la surface de la route qui est irradiée ne varie pas même si la position de levage varie.

10. Dispositif de notification d'approche de véhicule (20B) selon une quelconque des revendications 6 à 9, dans lequel la partie de commande (21B) modifie le contenu de la deuxième commande en fonction à la fois de la position de levage et de la vitesse de déplacement.

11. Dispositif de notification d'approche de véhicule (20B) selon une quelconque des revendications 6 à 10, dans lequel la partie de commande (21B) modifie le contenu de la première commande en fonction à la fois de la position de levage et de la vitesse de déplacement.

12. Dispositif de notification d'approche de véhicule (20B) selon la revendication 11, dans lequel la partie de commande (21B) envoie la première commande à la partie de modification de direction d'irradiation (22) de sorte qu'une position de la surface de la route qui est irradiée s'éloigne du véhicule lorsque la vitesse de déplacement augmente.

13. Chariot de ramassage (10B) comprenant :
le dispositif de notification d'approche de véhicule (20B) selon une quelconque des revendications 6 à 12 ;
une carrosserie de véhicule (11) comportant un dispositif de déplacement ; et
un mât (13) prévu sur un côté arrière de la carrosserie de véhicule (11) ;
dans lequel la cabine de conduite (14) du chariot de ramassage (10B) est capable d'être soulevée et abaissée le long du mât (13) ; et
la partie d'éclairage (23) est disposée au niveau de la cabine de conduite (14) du chariot de ramassage (10B) .
